Europäisches Patentamt

European Patent Office

Office européen des brevets

(11) Veröffentlichungsnummer: **0 490 284 A2**

# EUROPÄISCHE PATENTANMELDUNG

(21) Anmeldenummer: **91120944.3**

(22) Anmeldetag: **06.12.91**

(51) Int. Cl.5: **A45C 11/08**

(30) Priorität: **10.12.90 DE 9016687 U**

(43) Veröffentlichungstag der Anmeldung:
**17.06.92 Patentblatt 92/25**

(84) Benannte Vertragsstaaten:
**AT CH DE FR GB LI**

(71) Anmelder: **Firma Carl Zeiss**

**W-7920 Heidenheim (Brenz)(DE)**

(84) **CH DE FR LI AT**

(71) Anmelder: **CARL-ZEISS-STIFTUNG, HANDELND ALS CARL ZEISS**

**W-7920 Heidenheim an der Brenz(DE)**

(84) **GB**

(72) Erfinder: **Ratzlaff, Jörg**
**Welkerstrasse 114**
**W-7272 Altensteig(DE)**

(54) Gehäuse zur Aufbewarung von Fergläsern.

(57) Das erfindungsgemäße Gehäuse erlaubt erstmals eine seitliche Entnahme eines Fernglases aus dem Gehäuse, ohne daß ein Deckel oder Ähnliches eine leichte Entnahme behindert. Trotz dieser seitlichen Entnahme sind die optischen Flächen des Fernglases im Gehäuse durch dieses vor einer Verschmutzung geschützt.

Fig.1

EP 0 490 284 A2

Es sind verschiedene Arten von Aufbewahrungsbehältern für Taschenferngläser bekannt. Am bekanntesten sind die sogenannten Köcher, in welche das Fernglas im aufgefalteten Zustand hineingestellt wird und welche einen zu verschließenden Deckel besitzen. Der zur Aufbewahrung des Fernglases benötigte Raum ist sehr groß und die Herausnahme des Fernglases ist sehr umständlich.

Desweiteren ist es bekannt, zusammenfaltbare Ferngläser in Beuteln unterschiedlichsten Materialien (Leder, Plastik, ...) zusammengefaltet zu verstauen. Diese Form der Aufbewahrung schützt das Fernglas lediglich vor Verschmutzung, nicht aber vor mechanischen Beanspruchungen. Die Entnahme des Fernglases aus dem Beutel ist auch hier sehr umständlich.

Es ist die Aufgabe der Erfindung ein Gehäuse zur Aufbewahrung von Ferngläsern zu schaffen, welches eine leichte Entnahme des Fernglases aus dem Aufbewahrungsbehälter ermöglicht und dem Fernglas einen ausreichenden Schutz zumindest gegen Verschmutzung liefert.

Diese Aufgabe wird erfindungsgemäß durch den kennzeichnenden Teil des ersten Patentanspruchs gelöst.

Durch die seitliche Öffnung des Gehäuses kann das Fernglas leicht aus dem Gehäuse herausgenommen werden. Die Außenfläche des Okulars bietet genügend Schutz für das Fernglas. Damit aber der notwendige Verschmutzungsschutz der freien optischen Flächen des Fernglases gewährleistet ist, müssen diese bei der Aufbewahrung im Gehäuse staubdicht verschlossen sein.

Wenn das Gehäuse eine seitliche Öffnung besitzt, so daß ein Okular des Fernglases zumindest im Griffbereich frei liegt, kann man das Fernglas leicht aus dem Gehäuse entnehmen.

Vorteilhafterweise besitzen die Innenflächen der Außenflächen des Gehäuses eine bewegungshemmende Ausgestaltung, um bei der Herausnahme eines im Gehäuse zumindest teilweise gefaltet aufbewahrten Fernglases aus dem Gehäuse eine Entfaltung des Fernglases zu ermöglichen. Damit kann man sicherstellen, daß sich das Fernglas gleich nach seiner Entnahme aus dem Gehäuse in einem gebrauchsfähigen Zustand befindet.

In dem das Gehäuse aus einem Material besteht, welches zusätzlich einen hinreichenden Schutz vor transportbedingten mechanischen Belastungen liefert, verringert man die Gefahr einer Zerstörung des Fernglases. Was dabei als transportbedingte mechanische Belastungen anzusehen ist, ergibt sich aus dem jeweiligen Verwendungszweck. Die dabei zu erzielende höhere mechanische Belastbarkeit des Fernglases im Gehäuse kann durch die Steifigkeit des Gehäusematerials und/oder dessen Dicke realisiert werden. Auch eine entsprechende Ausfütterung mit elastischem Material im Innern des Gehäuses ist denkbar.

Wenn man die Begrenzungsflächen auf ihrer Innenseite zumindest im Bereich der offenen optischen Flächen des eingeschobenen Fernglases mit einem elastischen Belag versieht, erreicht man eine konstruktive Freiheit bei der Gestaltungen des Gehäuses bezüglich des Verschmutzungsschutzes.

Ist das Gehäuse der Form des Fernglases im gefalteten Zustand nachgestaltet, so kann das Gehäuse sehr klein und kompakt gestaltet werden.

Durch Griffmulden am Gehäuse kann man einen sicheren Einhandhalt des Gehäuses bei der Entnahme des Fernglases mit der anderen Hand aus dem Gehäuse sicherstellen.

Vorteilhafterweise ist an dem Gehäuse eine Öse für ein Halteband des Fernglases vorgesehen, damit das Gehäuse nach der Entnahme des Fernglases nicht verloren geht.

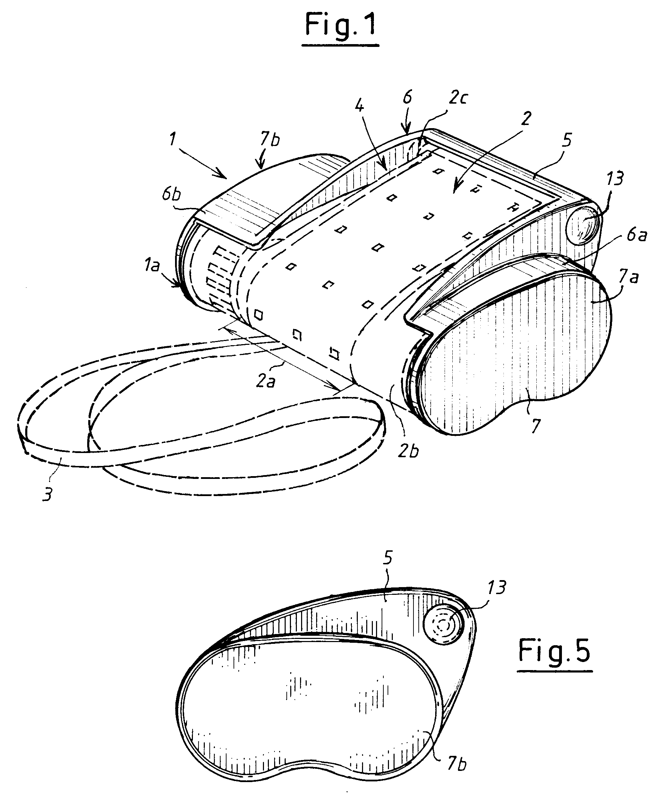

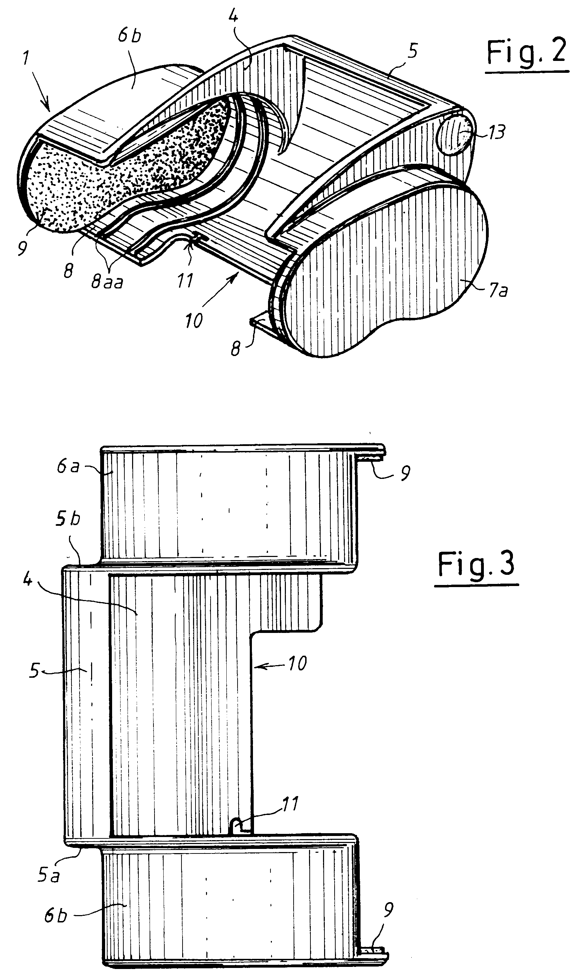

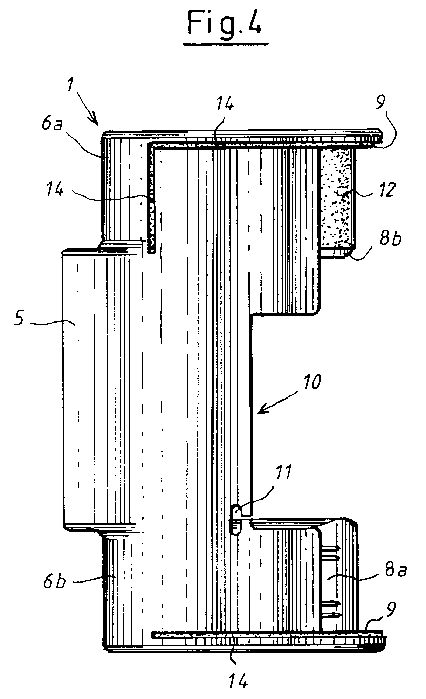

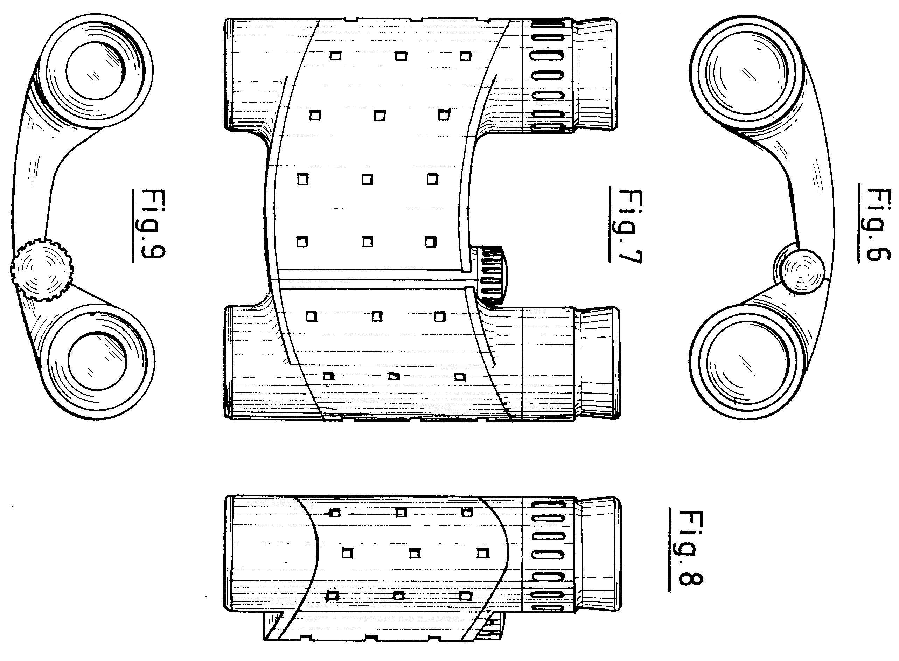

Die Erfindung wird nachstehend in beispielhafter Weise anhand der Fig. 1-5 der Zeichnungen näher erläutert, wobei weitere wesentliche Merkmale sowie dem besseren Verständnis dienende Erläuterungen und Ausgestaltungsmöglichkeiten des Erfindungsgedankens beschrieben sind.

Dabei zeigt

| | |
|---|---|
| Figur 1 | eine seitlich von unten gesehene perspektivische Ansicht des erfindungsgemäßen Aufbewahrungsbehälters mit schematisch angedeutetem Fernglas; |
| Figur 2 | eine seitlich von unten gesehene perspektivische Einsicht in den Aufbewahrungsbehälter aus Fig. 1; |
| Figur 3 | eine seitliche Aufsicht der Vorderseite des Aufbewahrungsbehälters aus Fig. 1; |
| Figur 4 | eine seitliche Aufsicht der Rückseite des Aufbewahrungsbehälters aus Fig. 1; und |
| Figur 5 | eine Ansicht des Aufbewahrungsbehälters auf Fig. 1 von oben und |
| Figur 6 bis 11 | eine Darstellung eines benutzbaren Fernglases für den Aufbewahrungsbehälter. |

Das in den Figuren 1-5 dargestellte Gehäuse (1) zur Aufbewahrung von Ferngläsern (2) ist teilweise offen gestaltet. Das halboffene Gehäuse ist so gestaltet, daß das eingeschobene Fernglas (2) zusammen mit dem Gehäuse (1) gemeinsam die äußeren Flächen bildet.

Bei einem Fernglas (2) ist insbesondere die Optik durch das Gehäuse (1) zu schützen. Deshalb liefert das Gehäuse (1) dem Fernglas (2) eine zusätzliche mechanische Sicherheit und schützt die freiliegenden optischen Flächen vor einer Verschmutzung.

Das Gehäuse (1) besteht aus einem Material, dessen mechanischen Eigenschaften dem eingeschobenen Fernglas (2) eine ausreichende Sicherheit vor normalen mechanischen Belastungen liefert. Dies kann durch eine ausreichend große Materialdicke und/oder durch eine hinreichend große mechanische Steifigkeit erreicht werden.

Um einen hinreichenden Schutz vor Verschmutzung der optischen Flächen des Fernglases (2) sicherzustellen und gleichzeitig eine leichte Entnahme des Fernglases (2) aus dem Gehäuse (1) zu ermöglichen, ist das Gehäuse (1) so gestaltet, daß das Fernglas (2) zu seiner Aufbewahrung seitlich in das Gehäuse (1) eingeführt wird. Dazu besitzt das Gehäuse (1) eine seitliche Öffnung (1a).

Die oberen und unteren Begrenzungsflächen (7a, 7b) des Gehäuses (1) sind geschlossen und überragen die optischen Flächen des eingeschobenen Fernglases (1) auch an der seitlichen Öffnung (1a) des Gehäuses (1). Auf den Innenseiten dieser Begrenzungsflächen (7) befindet sich ein elastischer Belag (9), welcher bei im Gehäuse (1) eingeführtem Fernglas (2) dieses im Bereich der offenen optischen Flächen staubdicht abschließt.

Das Gehäuse (1) ist der Form des Fernglases (1) nachempfunden. Um ein möglichst kompaktes, kleines Gehäuse (1) zu erhalten, erfolgt die Aufbewahrung des Fernglases (2) im gefalteten Zustand.

Die seitliche Öffnung (1a) des Gehäuses (1) geht im Griffbereich (2a) des Fernglases (2) in eine entsprechende Öffnung (10) auf der Rückseite und eine entsprechende Öffnung (4) auf der Vorderseite des Gehäuses (1) über. Die Öffnung (10) auf der Rückseite des Gehäuses (1) erlaubt ein leichtes Anfassen des äußeren Okulars (2b) des Fernglases (2). Die Öffnung (4) auf der Vorderseite des Gehäuses (1) ist größer gestaltet und erlaubt zudem eine Bewegung der Gelenkachse (2c) des Fernglases (2) bei der Herausnahme des Fernglases (2) aus dem Gehäuse (1).

Die sich an die Begrenzungsflächen (7) anschließenden Außenflächen (6a, 6b) sind sowohl im Inneren als auch im Äußeren des Gehäuses (1) leicht gewölbt. Sie erlauben eine ergonomische runde Bewegung bei der Herausnahme des Fernglases (2) aus dem Gehäuse (1). Damit sich das im Gehäuse (1) befindliche gefaltete Fernglas (2) bei der Herausnahme automatisch entfalten kann, leisten die Innenflächen (8) der Außenflächen (6a, 6b) außerhalb des Griffbereichs (2a) des Fernglases (2) auf das Fernglas (2) einen gewissen Widerstand. Dazu müssen die Innenflächen (8) der Außenflächen (6a, 6b) entsprechend ausgestaltet sein. Um einen entsprechenden Widerstand sicherzustellen, befinden sich auf der oberen Innenfläche (8a) klemmende Leitschienen (8aa). Die untere Innenfläche (8b) hingegen ist mit einem bewegungshemmenden, elastischen Belag (12) versehen. Durch Einschnitte (14) auf der Rückseite des Gehäuses (1) erreicht man eine elastische Deformierbarkeit dieser Gehäuserückseite (Blattfeder-Prinzip), welche bei der Entnahme des Fernglases (2) aus dem Gehäuse (1) der Entnahme einen zusätzlichen elastischen Widerstand entgegenstellt. Dadurch wird die automatische Entfaltung des Fernglases (2) bei der Herausnahme aus dem Gehäuse (1) unterstützt.

Damit der Benutzer das Gehäuse (1) bei der Herausnahme des Fernglases (2) sicher greifen kann, sind an der Oberseite (5a) und an der Unterseite (5b) des mittleren Gehäuseteils (5) Griffmulden (13) angebracht.

Damit nach einer Entnahme des Fernglases (2) der Behälter (1) nicht verloren geht, befindet sich an dem Gehäuse (1) eine Öse (11), in welche das Halteband (3) des Fernglases (2) eingeführt werden kann.

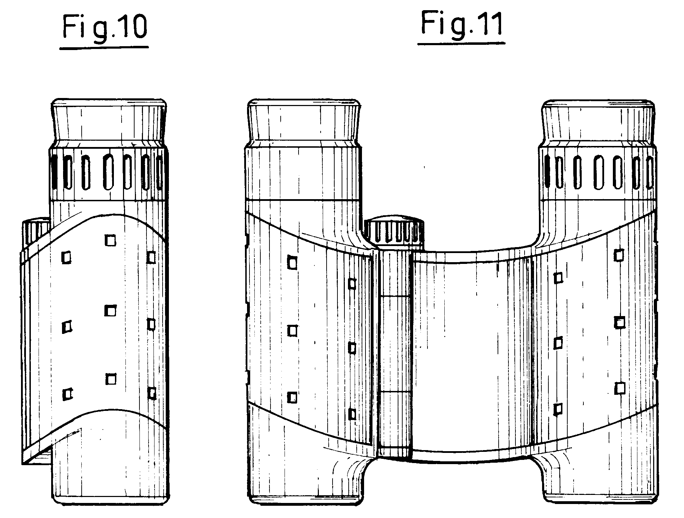

In den Figuren 6-11 ist beispielhaft ein Fernglas (2) dargestellt, welches zur Verwendung mit dem Behälter (1) geeignet ist.

**Patentansprüche**

1. Gehäuse zur Aufbewahrung von Ferngläsern, dadurch gekennzeichnet, daß das Gehäuse (1) eine seitliche Öffnung (1a) besitzt, so daß ein Okular des Fernglases (2) zumindest im Griffbereich frei liegt, und die oberen und unteren Seiten (7a, 7b) des Gehäuses (1) zumindest um die freien optischen Flächen des Fernglases (2) geschlossen sind.

2. Gehäuse nach Anspruch 1, dadurch gekennzeichnet, daß die seitliche Öffnung (1a) des Gehäuses (1) teilweise in Öffnungen (4, 10) auf der Vorder- und Rückseite des Gehäuses (1) übergeht, so daß ein Okular (2b) des Fernglases (2) zumindest in dessen Griffbereich (2a) von einer Hand eines Benutzers gut gegriffen werden kann.

3. Gehäuse nach einem der Ansprüche 1 oder 2, dadurch gekennzeichnet, daß die Innenflächen (8) der Außenflächen (6a, 6b) des Gehäuses (1) eine bewegungshemmende Ausgestaltung besitzen, um bei der Herausnahme eines im Gehäuse (1), zumindest teilweise, gefaltet aufbewahrten Fernglases (2) aus dem Gehäuse (1) eine Entfaltung des Fernglases (2) zu ermöglichen.

4. Gehäuse nach einem der Ansprüche 1, 2 oder 3, dadurch gekennzeichnet, daß das Gehäuse (1) aus einem Material besteht, welche eine hinreichende Sicherheit vor transportbedingten mechanischen Belastungen liefert.

5. Gehäuse nach einem der Ansprüche 1-4, dadurch gekennzeichnet, daß die Begrenzungsflächen (7) auf ihrer Innenseite zumindest im Bereich der offenen optischen Flächen des eingeschobenen Fernglases (2) einen elastischen Belag (12) besitzen.

6. Gehäuse nach einem der Ansprüche 1-5, dadurch gekennzeichnet, daß das Gehäuse (1) der Form des Fernglases (2) im gefalteten Zustand nachgestaltet ist.

7. Gehäuse nach einem der Ansprüche 1-6, dadurch gekennzeichnet, daß am Gehäuse (1) Griffmulden (13) vorgesehen sind, die einen sicheren Einhandhalt des Gehäuses (1) bei der Entnahme des Fernglases (2) aus dem Gehäuse (1) sicherstellen.

8. Gehäuse nach einem der Ansprüche 1-7, dadurch gekennzeichnet, daß im Gehäuse eine Öse (11) für ein Halteband (3) des Fernglases (2) vorgesehen ist.

## Fig.1

## Fig.5

Fig. 2

Fig. 3

# Fig.4

EP 0 490 284 A2

Fig.6

Fig.8

Fig.7

Fig.9

Fig.10

Fig.11